# EUROPÄISCHE PATENTSCHRIFT

(11) **EP 2 183 475 B1**
(45) Veröffentlichungstag und Bekanntmachung des Hinweises auf die Patenterteilung: **03.05.2017**
(21) Anmeldenummer: 08761000.2
(22) Anmeldetag: 13.06.2008
(51) Int. Cl.: F02F 3/00

(54) **KOLBEN MIT ÖLVERSORGUNGSRINNE FÜR NABENBOHRUNGEN**
PISTON HAVING OIL SUPPLY CHANNEL FOR HUB BORE HOLES
PISTON ÉQUIPÉ D'UNE CONDUITE D'ALIMENTATION EN HUILE POUR DES ALÉSAGES DE MOYEU

(30) Priorität: 24.09.2007 DE 102007045465
(43) Veröffentlichungstag der Anmeldung: 12.05.2010
(73) Patentinhaber: Federal-Mogul Nürnberg GmbH, 90441 Nürnberg (DE)
(72) Erfinder: BÖHM, Roland, 90617 Puschendorf (DE)
(74) Vertreter: Hoffmann Eitle
(86) Internationale Anmeldenummer: PCT/EP2008/057473
(87) Internationale Veröffentlichungsnummer: WO 2009/040148

(56) Entgegenhaltungen:
- EP-A- 0 387 931
- WO-A-2006/072293
- DE-A1-102005 003 061
- JP-A- 8 121 243
- US-B1- 6 279 456

## Beschreibung

### TECHNISCHES GEBIET

Die Erfindung betrifft einen Kolben mit Ölführung für einen Verbrennungsmotor.

### STAND DER TECHNIK

Kolben von Verbrennungsmotoren sind während des Betriebs äußerst hohen mechanischen und thermischen Belastungen ausgesetzt, so dass sicherzustellen ist, dass die Zylinder- und Kolbenabschnitte, die durch ihre Bewegung einer ständigen Reibung ausgesetzt sind, ausreichend gekühlt und geschmiert werden, um die Reibung so gering wie möglich zu halten.

Eine Maßnahme besteht darin, in dem Kolben einen im Bereich des Kolbenbodens beispielsweise ringförmig umlaufenden Kühlkanal vorzusehen, in den mittels zumindest einer Einlassöffnung Kühlmittel, beispielsweise Öl, eingespritzt werden kann. Die Versorgung mit Kühlöl erfolgt hierbei üblicherweise während des Abwärtshubes, während sich der Kolben auf eine Ölspritzdüse zu bewegt. Das Abführen des Öls findet üblicherweise dadurch statt, dass das Öl während der Aufwärtsbewegung des Kolbens durch Trägheitskräfte an die Unterseite des Kühlkanals gedrückt und aus dem Kühlkanal herausgepresst wird.

Die Schmierung erfolgt beispielsweise beim Viertaktmotor mittels einer Pumpe, die das Öl an die Schmierstellen befördert. Eine solche zu schmierende Stelle befindet sich unter anderem zwischen Kolben und Zylinderwand. Durch die Bewegung des Kolbens wird dabei eine gewisse Menge Öl vom Kolbenkopf abgestreift und kann sich entlang des Kolbenumfangs auch auf andere Bereiche des Kolbens verteilen. Hierbei sind die beweglichen Abschnitte zwischen Bolzenöffnung/Bolzen und Bolzen/oberes Pleuelauge hervorzuheben, da in diesen Bereichen eine Schmierung unbedingt erforderlich aber ein unmittelbares Zuführen von Schmieröl schwierig ist. Das liegt daran, dass diese Bereiche einer permanenten Auf- und Abwärtsbewegung unterworfen und daher schwer zugänglich sind.

Im Stand der Technik erhalten das kleine Pleuelauge und auch der Bolzen das Öl durch Spritzöl (Ölnebel) und/oder durch eine Bohrung im Schaft des Pleuels. Das aus den Pleuellagern der Kurbelwelle austretende Öl wird durch die Zentrifugalkraft indirekt auf die Zylinderwände und auch auf die oben genannten Bereiche geschleudert. Die Erzeugung eines Ölnebels kann auf vielfältige Weise erfolgen. Beispielsweise können Ölspritzdüsen und/oder Schleuderstifte vorgesehen sein, um das Öl gleichmäßig zu verteilen.

Durch diese indirekte Ölversorgung der zu schmierenden Bereiche um die Bolzenöffnung und um das obere (kleine) Pleuelauge, kann es im Stand der Technik vorkommen, dass diese Bereiche nur unzureichend und/oder undefiniert durch Spritzöl versorgt werden können.

Die JP 08121243 offenbart einen Kolben für einen Verbrennungsmotor mit einem hervorstehenden Abschnitt und einem ausgesparten Abschnitt in der Umgebung der Bolzenöffnung. Die DE 10 2005 041 001 A1 offenbart einen Leichtbaukolben, in den eine Verbindung zwischen einer Ringnut und der Bolzenöffnung vorgesehen ist.

Die WO 2006/072293 A1 beschreibt einen Kolben, bei dem eine um eine Bolzenbohrung zurückversetzte Fensterfläche und eine Vertiefung im Bereich einer untersten Ringnut für einen Ölfluss in Richtung der Fensterfläche vorgesehen ist. Die JP 08 121243 A beschreibt einen Kolben mit einem Öldurchgang im Bereich der unteren Ringnut und einem zweiten Öldurchgang.

### DARSTELLUNG DER ERFINDUNG

Der Erfindung liegt die Aufgabe zugrunde, die Schmierölversorgung der unter Reibung stehenden Abschnitte Bolzenöffnung/Bolzen und Bolzen/oberes Pleuelauge zu verbessern.

Die Lösung dieser Aufgabe erfolgt durch den im Anspruch 1 beschriebenen Kolben. Weitere vorteilhafte Ausgestaltungen folgen aus den Unteransprüchen.

Demnach weist ein Kolben für Verbrennungsmotoren einen Kolbenkopf und eine Kolbenbasis auf, wobei in der Kolbenbasis ein Hohlraum und in einer den Hohlraum ausbildenden Kolbenbasiswand Bolzenöffnungen, die auch als Bolzenbohrungen bezeichnet werden, vorgesehen sind. Der Kolben ist dadurch gekennzeichnet, dass (außen) an der äußeren Umfangsoberfläche der Kolbenbasis wenigstens eine Ölführung vorgesehen ist, deren Richtung eine bezüglich der Kolbenachse axiale Komponente aufweist und sich die Ölführung von dem Kolbenkopf im Wesentlichen in Richtung der Bolzenöffnung erstreckt. Damit wird sichergestellt, dass das von dem Kolbenkopf während der Auf- und Abwärtsbewegung des Kolbens abgestreifte Öl in Bereiche fließt, die durch die Ölführung vorgegeben sind. Um das abgestreifte und sich im unteren Kolbenkopfbereich sammelnde Öl in Abschnitte der Kolbenbasis zu befördern, weist die Ölführung eine axiale Komponente auf. Ein Teil des bei einer Abwärtsbewegung des Kolbens abgestreiften Öls wird bei einem Aufwärtshub, seiner Trägheit folgend, entlang der Ölführung befördert. Um eine unmittelbare und definierte Schmierung der Bolzenöffnung zu erreichen, weist der Kolben eine Ölführung auf, die sich von dem Kolbenkopf im Wesentlichen direkt in Richtung der Bolzenöffnung erstreckt. Damit wird sichergestellt, dass das von dem Kolbenkopf während der Auf- und Abwärtsbewegung des Kolbens abgestreifte Öl in den zu schmierenden Bolzenöffnungsbereich fließt. Mit anderen Worten liegt im Wesentlichen über die gesamte und im Wesentlichen die kürzeste Strecke vom Kolbenkopf zu der Bolzenöffnung eine definierte Führung des Öls vor, die zumindest bevorzugt keine Abwinklungen oder Ablenkungen aufweist.

Vorzugsweise befindet sich in der Bolzenöffnung (Bolzenbohrung) des Kolbens wenigstens eine seitliche Wesentlichen über die gesamte und im Wesentlichen die kürzeste Strecke vom Kolbenkopf zu der Bolzenöffnung eine definierte Führung des Öls vor, die zumindest bevorzugt keine Abwinklungen oder Ablenkungen aufweist.

Ferner befindet sich in der Bolzenöffnung (Bolzenbohrung) des Kolbens wenigstens eine seitliche Aussparung (sidereliefs), die Schmieröl aufnehmen und speichern kann. Mit einer erfindungsgemäßen Ölführung kann eine solche seitliche Aussparung gezielt bedient werden, die ihrerseits durch ihre Gestalt Schmieröl an Reibungsflächen abgeben kann. Es sei darauf hingewiesen, dass der Begriff "Öl" selbstverständlich auch andere Schmier- und/oder Kühlmittel umfasst, solang sie eine geeignete Viskosität aufweisen, um sich entlang einer Ölführung bewegen und ausbreiten zu können.

Vorzugsweise ist ein Sicherungsring in die Bolzenöffnung eingebracht. Der Sicherungsring verhindert ein ungewolltes Verschieben des Bolzens.

Vorzugsweise ist in dem zylindrischen Kolben wenigstens eine Ölführungsöffnung vorgesehen, die den Hohlraum oder die seitliche Aussparung mit der Ölführung verbindet. Eine solche Ölführungsöffnung stellt eine geeignet Möglichkeit dar den Hohlraum und ggf. die seitlichen Aussparungen der Bolzenöffnung mit Öl gezielt zu bedienen. Auf diese Weise erhält der Bolzen nicht nur aus Richtung der Kolbenaußenseite sondern auch aus Richtung der Kolbeninnenseite Öl. Dadurch kann sich das Schmiermittel besonders einfach entlang des Kolbens auch zwischen die reibenden Flächen des Bolzens und des kleinen Pleuelauges verteilen. Ferner dient auch das in dem Hohlraum und ggf. in den seitlichen Aussparungen des Hohlraums befindliche Öl als Spritzöl, das mit besonders hoher Wahrscheinlichkeit die zu schmierenden Bereiche Bolzenöffnung/Bolzen und Bolzen/oberes Pleuelauge aufgrund seiner geringen Entfernung erreicht.

Vorzugsweise ist die Ölführung eine Nut. Das Einbringen einer Nut in den Umfangsbereich des Kolbens ist eine einfache und preisgünstige Möglichkeit eine Ölführung gemäß der vorliegenden Erfindung bereitzustellen.

Vorzugsweise ist das kolbenkopfseitige Ende der Ölführungsnut trichterförmig und/oder zugespitzt ausgebildet, so dass das abgestreifte Öl bevorzugt in die Ölführungsnut strömt. Auf diese Weise kann durch die Gestalt der Nut die Verteilung und Dosierung des Öls beeinflusst werden.

Vorzugsweise sind für eine Bolzenöffnung zwei Ölführungsnuten vorgesehen, um die Bolzenöffnung gleichmäßig von zwei Seiten aus zu schmieren.

Vorzugsweise ist die Ölführung entlang der Führungsrichtung länglich ausgebildet. Eine Ölführung, deren Ausdehnung in Richtung der Führung wesentlich größer ist als in einer Richtung senkrecht dazu, schwächt den Kolben strukturell kaum.

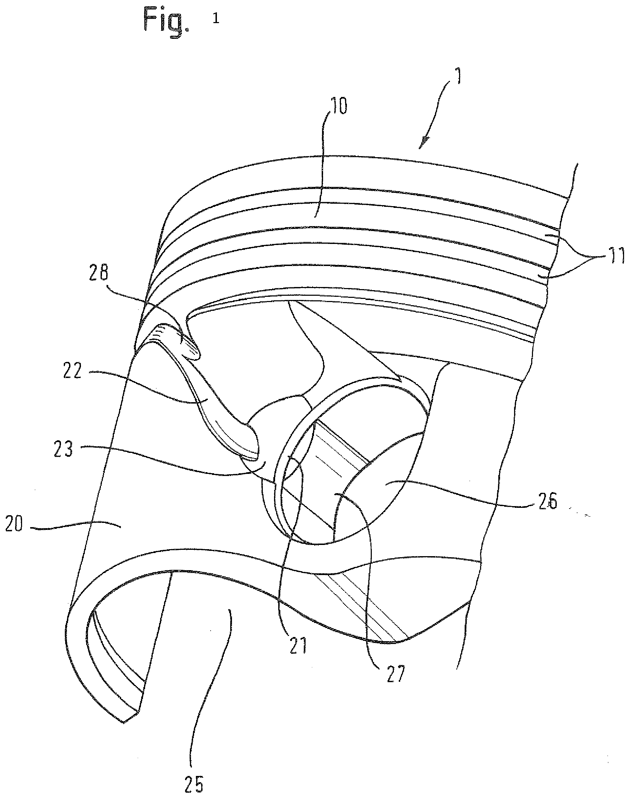

### KURZE BESCHREIBUNG DER ZEICHNUNG

Nachfolgend wird ein in der Zeichnung dargestelltes Ausführungsbeispiel der Erfindung näher erläutert.

Die Figur zeigt schematisch einen perspektivischen Ausschnitt eines erfindungsgemäßen Kolbens.

### BESCHREIBUNG EINER AUSFÜHRUNGSFORM DER ERFINDUNG

Die Figur zeigt einen Ausschnitt eines erfindungsgemäßen Kolbens 1 mit einem Kolbenkopf 10 und einer Kolbenbasis 20. Der Kolbenkopf 10 ist zylindrisch ausgebildet und ist mit Ringnuten 11 und mit nicht gezeigten Ölringen versehen. An den Kolbenkopf 10 schließt sich in der Figur nach unten hin die Kolbenbasis 20 an, die einen Hohlraum 25 aufweist. Die Kolbenbasis 20 muss, so wie im vorliegenden Fall, keine kreiszylindrische Form aufweisen. In der vorliegenden Ausführungsform umfasst die Kolbenbasis 20 vom Umfang zurückversetzte Wände, die eine kastenförmige Kolbenbasis ausbilden. In dem Umfangsbereich der Kolbenbasis 20 sind zwei gegenüberliegende Bolzenöffnungen 26 zur Aufnahme eines Bolzens vorgesehen. In der Figur ist dabei nur ein Kolbenausschnitt mit einer einzigen Bolzenöffnung 26 gezeigt. Diese Bolzenöffnungen 26 können, wie in der Figur gezeigt ist, mit einem Sicherungsring 21 ausgestattet sein, der in einer in der Bolzenöffnung 26 ausgebildeten Nut aufgenommen ist. In den Bolzenöffnungen 26 lagert ein in der Figur nicht gezeigter Bolzen, der als Achse für das kleine Pleuelauge eines Pleuels (nicht gezeigt) dient. Der Hohlraum 25 des Kolbens 1 ist so ausgebildet, dass sich der Pleuel um den Bolzen mit einer Amplitude, die durch den Hub des Kolbens 1, den Pleuel und die Kurbelwelle vorgegeben ist, drehen kann.

Bei dem Kolben 1 der vorliegenden Ausführungsform erstreckt sich eine Ölführungsnut 22 von dem unteren Ende des Kolbenkopfes 10 im Wesentlichen direkt in Richtung der Bolzenöffnung 26 in der äußeren Umfangsoberfläche der Bolzenbasis. Ferner weist die Kolbenbasis 20 eine Ölführungsöffnung 23 in der Nähe der Bolzenöffnung 26 auf. Die Ölführungsöffnung 23 verbindet das bolzenöffnungsseitige Ende der Ölführungsnut 22 mit einer seitlichen Aussparung (siderelief) 27 der Bolzenöffnung 26.

Ein Teil des von dem Kolbenkopf 10 während einer Abwärtsbewegung des Kolbens 1 in dem Zylinder abgestreiften Öls, sammelt sich zunächst an dem kolbenkopfseitigen Ende der Ölführungsnut 22 und fließt beim Aufwärtshub seiner Trägheit folgend vorzugsweise entlang der Ölführungsnut 22 in die definierten Bereiche, die durch die Ölführungsöffnung 23 in der Nähe der Bolzenöffnung 26 und die seitlichen Aussparungen 27 in der Bolzenöffnung 26 vorgegeben sind. Das Öl gelangt auf diese Weise unmittelbar und geführt in die zu schmierenden Bereiche, insbesondere in die Reibungszentren Bolzenöffnung/Bolzen und Bolzen/oberes Pleuelauge.

Das kolbenkopfseitige Ende der Ölführungsnut 22 kann so ausgebildet sein, dass Öl vermehrt gesammelt wird, bevor es sich entlang der Ölführungsnut 22 in Richtung der Bolzenöffnung 26 bewegt. Insbesondere kann das kolbenkopfseitige Ende der Ölführungsnut 22 trichterförmig bzw. zugespitzt ausgebildet sein, so dass das abgestreifte Öl bevorzugt über eine dadurch gebildete Nische 28 in die Ölführungsnut 22 strömt. Auf ähnliche Weise kann auch das bolzenöffnungsseitige Ende der Ölführungsnut 22 durch seine Gestalt die Verteilung des Öls beeinflussen. Insbesondere kann dieses Ende zumindest zum Teil die Bolzenöffnung 26 einschließen, um das Öl gleichmäßig um die Bolzenöffnung 26 herum, bzw. um den Bolzen herum zu verteilen. Durch die konkrete Ausgestaltung der Ölführungsnut 22 und deren Enden kann außerdem eine gezielte Dosierung des Öls, das in Richtung zur Bolzenöffnung 26 geführt werden soll, vorgenommen werden.

Es können mehrere Ölführungsnuten 22 für eine oder mehrere Bolzenöffnungen 26 vorgesehen sein, die außerdem in Form und Länge unterschiedlich ausgebildet sein können. Dabei bieten sich zwei Ölführungsnuten 22 für eine Bolzenöffnung 26 besonders an, um die Bolzenöffnung 26 gleichmäßig von zwei Seiten aus zu schmieren.

Schließlich sei erwähnt, dass die Ölführung nicht als Nut, Rille oder Aussparung vorgesehen sein muss. Im Besonderen ist es möglich, eine Führung durch eine oder mehrere hervorstehende Kanten oder durch geeignete Beschichtungen auszubilden. Dabei kann ein definierter Fließweg durch Oberflächeneffekte des Schmiermittels, des Kolbenmaterials und der Ölführung erzielt werden.

## Patentansprüche

1. Kolben für Verbrennungsmotoren, der einen Kolbenkopf (10) und eine Kolbenbasis (20) aufweist, wobei in der Kolbenbasis (20) ein Hohlraum (25) und in einer den Hohlraum (25) ausbildenden Kolbenbasiswand Bolzenöffnungen (26) vorgesehen sind, wobei
an der äußeren Umfangsoberfläche der Kolbenbasis (20) wenigstens eine Ölführung (22) vorgesehen ist, deren Richtung eine bezüglich der Kolbenachse axiale Komponente aufweist, und **dadurch gekennzeichnet, dass**
sich die Ölführung (22) von dem Kolbenkopf (10) im Wesentlichen direkt in Richtung einer Bolzenöffnung (26) erstreckt, und in wenigstens einer Bolzenöffnung (26) wenigstens eine seitliche Aussparung (27) vorgesehen ist.

2. Kolben nach Anspruch 1, **dadurch gekennzeichnet, dass** in die Bolzenöffnung (26) ein Sicherungsring (21) eingebracht ist.

3. Kolben nach einem der vorhergehenden Ansprüche, **dadurch gekennzeichnet, dass** wenigstens eine Ölführungsöffnung (23) vorgesehen ist, die den Hohlraum (25) oder die seitliche Aussparung (27) mit der Ölführung (22) verbindet.

4. Kolben nach Anspruch 2 und 3, **dadurch gekennzeichnet, dass** die Ölführungsöffnung (23) und die Bolzenöffnung (26) kontinuierlich ausgebildet sind.

5. Kolben nach einem der vorhergehenden Ansprüche, **dadurch gekennzeichnet, dass** die Ölführung (22) eine Nut ist.

6. Kolben nach Anspruch 5, **dadurch gekennzeichnet, dass** das kolbenkopfseitige Ende der Ölführungsnut (22) trichterförmig und/oder zugespitzt ausgebildet ist.

7. Kolben nach einem der Ansprüche 5 und 6, **dadurch gekennzeichnet, dass** für eine Bolzenöffnung (26) zwei Ölführungsnuten (22) vorgesehen.

8. Kolben nach einem der vorhergehenden Ansprüche, **dadurch gekennzeichnet, dass** die Ölführung (22) entlang der Führungsrichtung länglich ist.

## Claims

1. Piston for internal combustion engines which has a piston head (10) and a piston base (20), wherein in the piston base (20) is provided a cavity (25) and in a piston base wall which forms the cavity (25) are provided pin openings (26), wherein at the outer peripheral surface of the piston base (20) is provided at least one oil duct (22) the direction of which has an axial component relative to the piston axis, and **characterised in that** the oil duct (22) extends from the piston head (10) substantially directly in the direction of a pin opening (26), and in at least one pin opening (26) is provided at least one side recess (27).

2. Piston according to claim 1, **characterised in that** a locking ring (21) is introduced into the pin opening (26).

3. Piston according to any of the preceding claims, **characterised in that** at least one oil duct opening (23) is provided, which connects the cavity (25) or the side recess (27) to the oil duct (22).

4. Piston according to claims 2 and 3, **characterised in that** the oil duct opening (23) and the pin opening (26) are continuous.

5. Piston according to any of the preceding claims, **characterised in that** the oil duct (22) is a groove.

6. Piston according to claim 5, **characterised in that** the end of the oil duct groove (22) on the piston head side is funnel-shaped and/or tapered.

7. Piston according to either of claims 5 and 6, **characterised in that** two oil duct grooves (22) are provided for one pin opening (26).

8. Piston according to any of the preceding claims, **characterised in that** the oil duct (22) is elongate in the direction of conduction.

## Revendications

1. Piston pour des moteurs à combustion interne, qui présente une tête de piston (10) et une base de piston (20), dans lequel une cavité (25) est prévue dans la base de piston (20) et des ouvertures pour boulon (26) sont prévues dans une paroi de base de piston réalisant la cavité (25), dans lequel
au moins un guidage d'huile (22) est prévu au niveau de la surface périphérique extérieure de la base de piston (20), dont la direction présente une composante axiale par rapport à l'axe de piston, et **caractérisé en ce que**
le guidage d'huile (22) s'étend depuis la tête de piston (10) sensiblement directement en direction d'une ouverture pour boulon (26), et au moins un évidement latéral (27) est prévu dans au moins une ouverture pour boulon (26).

2. Piston selon la revendication 1, **caractérisé en ce qu'**une bague de blocage (21) est introduite dans l'ouverture pour boulon (26).

3. Piston selon l'une quelconque des revendications précédentes, **caractérisé en ce qu'**au moins une ouverture de guidage d'huile (23) est prévue, laquelle relie la cavité (25) ou l'évidement latéral (27) au guidage d'huile (22).

4. Piston selon la revendication 2 et 3, **caractérisé en ce que** l'ouverture de guidage d'huile (23) et l'ouverture pour boulon (26) sont réalisées en continu.

5. Piston selon l'une quelconque des revendications précédentes, **caractérisé en ce que** le guidage d'huile (22) est une rainure.

6. Piston selon la revendication 5, **caractérisé en ce que** l'extrémité, située côté tête de piston, de la rainure de guidage d'huile (22) est réalisée de manière à présenter une forme d'entonnoir et/ou de manière pointue.

7. Piston selon l'une quelconque des revendications 5 et 6, **caractérisé en ce que** deux rainures de guidage d'huile (22) sont prévues pour une ouverture pour boulon (26).

8. Piston selon l'une quelconque des revendications précédentes, **caractérisé en ce que** le guidage d'huile (22) est oblong le long de la direction de guidage.
